# EUROPEAN PATENT APPLICATION

(11) **EP 4 764 848 A1**
(43) Date of publication of application: **24.06.2026**
(21) Application number: 24853612.0
(22) Date of filing: 06.08.2024
(51) Int. Cl.: G06F 9/455

(54) **VIRTUAL RESOURCE CREATION METHOD AND APPARATUS, ELECTRONIC DEVICE, CHIP, STORAGE MEDIUM, AND COMPUTER PROGRAM PRODUCT**

(30) Priority: 17.08.2023 CN 202311037854
(71) Applicant: Moore Threads Technology Co., Ltd., Beijing 100036 (CN)
(72) Inventor: LIANG, Yongfei, Beijing 100036 (CN); WANG, Jin, Beijing 100036 (CN); ZUO, Haitao, Beijing 100036 (CN); YUAN, Zhaokai, Beijing 100036 (CN)
(74) Representative: Lavoix
(86) International application number: PCT/CN2024/110079
(87) International publication number: WO 2025/036201

(57) **Abstract**

Embodiments of the present disclosure provide a virtual resource creation method and apparatus, an electronic device, a chip, a storage medium, and a computer program product. The virtual resource creation method comprises: on the basis of a virtual resource creation request, determining a target resource configuration option from among a plurality of resource configuration options, wherein the resource configuration options are determined on the basis of resource units which are located on a physical graphics card and support a virtual machine to realize an image processing function; determining a target number of resource units on the basis of the target resource configuration option; and creating a target virtual graphics processing unit device on the basis of the target number of resource units, and running a target virtual machine on the basis of the target virtual graphics processing unit device.

## Description

### CROSS-REFERENCE TO RELATED APPLICATION

This application is based on and claims priority to Chinese Patent Application No. 202311037854.2, filed on August 17, 2023, and entitled " METHOD AND APPARATUS FOR CREATING VIRTUAL RESOURCES, ELECTRONIC DEVICE, CHIP, AND STORAGE MEDIUM ", the entire contents of which are incorporated herein by reference.

### TECHNICAL FIELD

Embodiments of the present disclosure relate to, but are not limited to, the field of computer technologies, and in particular to a method and apparatus for creating virtual resources, an electronic device, a chip, a storage medium, and a computer program product.

### BACKGROUND

Under the virtualization framework of Quick Emulator (QEMU) and Kernelbased Virtual Machine (KVM), after selecting one mdevctl type from the mdevctl type list provided by the vendor to create a vGPU device (Virtual Graphics Processing Unit device), it is impossible to select other mdevctl types to create vGPU devices of other types. Only vGPU devices of the same type can be created according to the previously selected mdevctl type. In other words, if a vGPU device has been created before, only vGPU devices of the same type can be created subsequently. This results in a single type of resources for the created vGPU devices and poor flexibility.

### SUMMARY

Embodiments of the present disclosure provide a method and apparatus for creating virtual resources, an electronic device, a chip, a storage medium, and a computer program product.

Embodiments of the present disclosure provide a method for creating virtual resources, include: determining a target resource configuration option from a plurality of resource configuration options based on a virtual resource creation request, where the resource configuration options are determined based on one or more resource units that are located on a physical graphics card and support a virtual machine in implementing an image processing function; determining a target number of the resource units based on the target resource configuration option; creating a target virtual graphics processing unit device based on the target number of the resource units, and running a target virtual machine based on the target virtual graphics processing unit device.

Embodiments of the present disclosure provide an apparatus for creating virtual resources, include: a determination part configured to determine a target resource configuration option from the plurality of resource configuration options based on a virtual resource creation request, where the resource configuration options are determined based on one or more resource units that are located on a physical graphics card and support a virtual machine in implementing an image processing function; the determination part is further configured to determine a target number of the resource units based on the target resource configuration option; and a processing part configured to create a target virtual graphics processing unit device based on the target number of the resource units, and run a target virtual machine based on the target virtual graphics processing unit device.

Embodiments of the present disclosure provide an electronic device, including a first memory and a first processor. The first memory stores a computer program executable by the first processor, and the first processor is configured to implement the aforementioned method when executing the program.

Embodiments of the present disclosure provide a chip, including a second memory and a second processor. The second memory stores a computer program executable by the second processor, and the second processor is configured to implement the aforementioned method when executing the program.

Embodiments of the present disclosure provide a computer-readable storage medium having a computer program stored thereon. The computer program, when executed by a processor, implements the aforementioned method.

Embodiments of the present disclosure provide a computer program product, including a non-transitory computer-readable storage medium storing a computer program. The computer program, when read and executed by a computer, implements the aforementioned method.

In the embodiments of the present disclosure, on the one hand, since the multiple resource configuration options are determined based on one or more resource units that are located on a physical graphics card and support a virtual machine in implementing an image processing function, and each resource configuration option corresponds to a different number of resource units, multiple virtual graphics processing unit devices (vGPU devices) with different resource sizes can be created through the multiple resource configuration options for use by different virtual machines. The allocated virtual resources (vGPU resources) are diverse, thereby satisfying various resource requirements of virtual machines through the multiple resource configuration options. On the other hand, the multiple resource configuration options created based on the resource units are independent of each other and do not restrict one another. Different resource configuration options can be successively determined from the multiple resource configuration options to create different virtual graphics processing unit devices for use by different virtual machines. In other words, if a virtual graphics processing unit device has been created before based on any resource configuration option selected from the multiple resource configuration options, another resource configuration option can still be selected from the multiple resource configuration options to create a virtual graphics processing unit device different from the previous virtual graphics processing unit device. In other words, the already created virtual graphics processing unit device and its corresponding resource configuration option do not affect the current determination of a new resource configuration option (different from the resource configuration option corresponding to the already created virtual graphics processing unit device) from the multiple resource configuration options to create a new virtual graphics processing unit device. Thus, creating virtual graphics processing unit devices for virtual machines through the multiple resource configuration options determined based on the resource units is not restricted by the already created virtual graphics processing unit device, enabling the creation of virtual graphics processing unit devices (vGPU devices) with different resource sizes for different virtual machines, flexible allocation of vGPU resources, satisfying various resource requirements of virtual machines, and achieving excellent flexibility.

It should be understood that the foregoing general description and the following detailed description are merely exemplary and explanatory and are not intended to limit the present disclosure.

### BRIEF DESCRIPTION OF THE DRAWINGS

To illustrate the technical solutions of the embodiments of the present disclosure more clearly, the drawings required for use in the embodiments of the present disclosure are described below.

The drawings herein are incorporated into and constitute a part of this specification. These drawings show embodiments consistent with the present disclosure and, together with the specification, serve to explain the technical solutions of the present disclosure.
FIG. 1 is a schematic diagram of an implementation flowchart of a method for creating virtual resources according to an embodiment of the present disclosure;
FIG. 2 is a schematic diagram of an implementation flowchart of another method for creating virtual resources according to an embodiment of the present disclosure;
FIG. 3 is a schematic diagram of an implementation flowchart of yet another method for creating virtual resources according to an embodiment of the present disclosure;
FIG. 4 is a schematic diagram of an implementation flowchart of a method for creating virtual resources provided by yet another embodiment of the present disclosure;
FIG. 5 is a schematic diagram of an flowchart for creating a vGPU device according to an embodiment of the present disclosure;
FIG. 6 is a schematic diagram of another flowchart for creating a vGPU device according to an embodiment of the present disclosure;
FIG. 7 is a schematic structural diagram of an apparatus for creating virtual resources according to an embodiment of the present disclosure;
FIG. 8 is a schematic diagram of the hardware entity of an electronic device according to an embodiment of the present disclosure;
FIG. 9 is a schematic structural diagram of a chip according to an embodiment of the present disclosure.

### DETAILED DESCRIPTION

To clarify the objectives, technical solutions, and advantages of the embodiments of the present disclosure, the specific technical solutions of the present disclosure will be described in detail below in conjunction with the accompanying drawings in the embodiments of the present disclosure. The following embodiments are used to illustrate the present disclosure but are not intended to limit the scope of the present disclosure.

Unless otherwise defined, all technical and scientific terms used herein have the same meanings as commonly understood by those skilled in the technical field to which the present disclosure belongs. The terms used herein are only for the purpose of describing the embodiments of the present disclosure and are not intended to limit the present disclosure.

In the following description, references to "some embodiments", "this embodiment", "embodiments of the present disclosure" and examples describe subsets of all possible embodiments. However, it should be understood that "some embodiments" may be the same subset or different subsets of all possible embodiments, and may be combined with each other without conflict.

Descriptions such as "first, second, third" appearing in the embodiments of the present disclosure are only for illustration and distinguishing the described objects, have no order, do not indicate any special limitation on the number of devices in the embodiments of the present disclosure, and shall not constitute any limitation on the embodiments of the present disclosure.

Under the virtualization framework of QEMU and KVM, any mdevctl type can be selected from a list of mdevctl types provided by the vendor to create a vGPU device for use by a virtual machine, so that the virtual machine can reduce the load on the CPU (Central Processing Unit) in the virtual machine through the created vGPU device. Among them, a resource size of the vGPU device that can be created is described in the mdevctl type. In implementation, the resource sizes of the vGPU devices created according to different mdevctl types are different. However, if a mdevctl type is selected from the list of mdevctl types to create a vGPU device for use by a virtual machine, other mdevctl type cannot be selected to create a new vGPU device, and the new vGPU device can only be created according to the previously selected mdevctl type. That is, when a vGPU device has been created before, only vGPU device(s) with the same resource size can be created.

In the related art, if it is desired that a newly created virtual machine has a vGPU device with a different resource size, it is necessary to select a different mdevctl type to create a vGPU device, specifically:
Unload the vGPU drivers in all running virtual machine(s) or directly shut down all virtual machine(s);
Destroy the created vGPU device(s);
Reselect a new mdevctl type from the list of mdevctl types to create a vGPU device with a different resource for use by a virtual machine.

However, different virtual machines have different service load conditions. Some virtual machines have heavy loads and need more vGPU resources; some virtual machines have light loads and do not need so many vGPU resources. In the related art, the vGPU devices allocated to different virtual machines have the same resource size, resulting in very inflexible resource allocation. For virtual machines with heavy loads, which require more vGPU resources, insufficient allocated vGPU resources will affect the user experience of the virtual machines. For virtual machines with light loads, which require fewer vGPU resources, excessive allocated vGPU resources will lead to resource waste.

It can be seen from the above that the above solution cannot achieve elastic allocation of vGPU resources. The vGPU devices allocated to all virtual machines have the same resource size, and it is impossible to allocate vGPU devices with different resource sizes to different virtual machines according to different service scenarios.

Based on the above problems, the embodiments of the present disclosure provide a method for creating virtual resources, which can create different vGPU devices (i.e., virtual graphics processing unit devices) for use by different virtual machines, so as to meet various vGPU resource requirements of virtual machines. This vGPU device creation method can be applied to various electronic devices, which can be physical machines such as servers, notebook computers, and desktop computers.

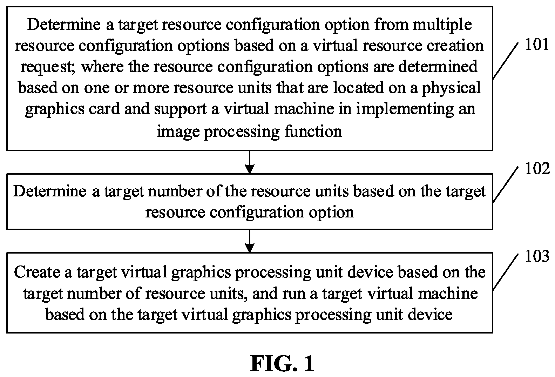

FIG. 1 is a schematic diagram of an implementation flowchart of a method for creating virtual resources according to an embodiment of the present disclosure. As shown in FIG. 1, the method may include the following steps 101 to 103.

At step 101, a target resource configuration option is determined from multiple resource configuration options based on a virtual resource creation request. Here, the resource configuration options are determined based on one or more resource units that are located on a physical graphics card and support a virtual machine in implementing an image processing function.

At step 102, a target number of the resource units are determined based on the target resource configuration option.

At step 103, a target virtual graphics processing unit device is created based on the target number of the resource units, and a target virtual machine is run based on the target virtual graphics processing unit device.

In the embodiments of the present disclosure, on the one hand, since multiple resource configuration options are determined based on one or more resource units that are located on a physical graphics card and support a virtual machine in implementing an image processing function, and each resource configuration option corresponds to a different number of resource units, multiple virtual graphics processing unit devices (vGPU devices) with different resource sizes can be created through multiple resource configuration options for use by different virtual machines. The allocated virtual resources (vGPU resources) are diverse, thereby meeting various resource requirements of virtual machines through multiple resource configuration options. On the other hand, the multiple resource configuration options created based on resource units are independent of each other and do not restrict each other. Different resource configuration options can be successively determined from multiple resource configuration options to create different virtual graphics processing unit devices for use by different virtual machines. That is, if a virtual graphics processing unit device has been created before based on any resource configuration option determined from multiple resource configuration options, a new resource configuration option can still be selected from multiple resource configuration options to create a virtual graphics processing unit device different from the previous virtual graphics processing unit device. In other words, the created virtual graphics processing unit device and its corresponding resource configuration option will not affect the current determination of a new resource configuration option (different from the resource configuration option corresponding to the created virtual graphics processing unit device) from multiple resource configuration options to create a new virtual graphics processing unit device. In this way, creating virtual graphics processing unit devices for virtual machines through multiple resource configuration options determined based on the resource units is not restricted by the created virtual graphics processing unit devices, realizing the creation of virtual graphics processing unit devices (vGPU devices) with different resource sizes for different virtual machines, flexibly allocating vGPU resources, meeting various resource requirements of virtual machines, and having good flexibility.

The optional implementation manners of the above steps and related terms will be described respectively below.

In step 101, a target resource configuration option is determined from multiple resource configuration options based on a virtual resource creation request. The resource configuration options are determined based on one or more resource units that are located on a physical graphics card and support a virtual machine in implementing an image processing function.

Here, the virtual resource creation request is used to create a target virtual graphics processing unit device, to run a target virtual machine based on the target virtual graphics processing unit device. In short, the virtual resource creation request is used to allocate virtual resources (the target virtual graphics processing unit device) to the target virtual machine. The target virtual machine is a virtual machine with a demand for acquiring virtual resources, which can be a newly created virtual machine on the electronic device or a newly created virtual machine on other devices outside the electronic device. All virtual resources in the virtual graphics processing unit device (vGPU device) involved in the embodiments of the present disclosure are derived from resources in the physical graphics card. A resource unit is the minimum resource that can be allocated to a virtual machine; the resource unit can be used to divide resources in the physical graphics card, that is, a resource unit is the granularity for dividing resources in the physical graphics card. Resources in the physical graphics card may include but are not limited to video memory resources and computing power resources.

Multiple resource configuration options are used to create different virtual graphics processing unit devices for virtual machines. Each resource configuration option corresponds to a virtual graphics processing unit device with a respective resource size. For example, resource configuration options may be mdevctl types, and multiple mdevctl types can form a list of mdevctl types. Since each resource configuration option corresponds to a different resource size, the virtual graphics processing unit device created according to each resource configuration option has a different resource size. That is, the virtual graphics processing unit device corresponding to each resource configuration option has a different resource size; in other words, each resource configuration option corresponds to a virtual graphics processing unit device of a respective type, where the type is determined according to the resource size of the virtual graphics processing unit device.

The target resource configuration option is any resource configuration option selected from multiple resource configuration options based on the virtual resource creation request, and is used to create a target virtual graphics processing unit device for the target virtual machine. For each resource configuration option, corresponding computing power resources and video memory resources are described therein.

In a feasible implementation manner, multiple resource configuration options can be preset based on resource units. In this way, the resource configuration options supported by the physical graphics card can be obtained through the command mdevctl types, and then the target resource configuration option can be determined from multiple resource configuration options according to the service requirement of the target virtual machine, so as to create a target virtual graphics processing unit device for the target virtual machine.

In some embodiments, the resource configuration options can be determined by: determining the resource unit based on the minimum resources that support a virtual machine in implementing an image processing function; determine the resource configuration options based on the resource unit.

Here, the minimum resources that support a virtual machine in implementing an image processing function refer to a minimum resource requirement of a virtual machine. Determining the resource unit based on the minimum resources is to determine the resource unit according to the minimum resource requirement of the virtual machine. The resource unit determined in this way can guarantee the minimum requirement of the virtual machine on resources, and further, the multiple resource configuration options determined based on the resource unit can meet more requirements of the virtual machine on resources.

It can be understood that determining multiple resource configuration options based on the resource unit is to determine multiple resource configuration options that can be used to create virtual graphics processing unit devices with different resource sizes on the basis of the resource unit, so as to create virtual machine resource devices with different resource sizes for different virtual machines through multiple resource configuration options, meeting the diverse requirements of virtual machines on resources.

In a feasible implementation manner, the resource unit can be determined based on the minimum resources located on the physical graphics card that can implement the an image processing function required by a virtual machine; multiple resource configuration options can be determined based on multiples of the resource unit. For example, if the resource unit is 512M of video memory resources, multiple resource configuration options may include resource configuration option 1 describing 1G of video memory resources, resource configuration option 2 describing 1.5G of video memory resources, resource configuration option 3 describing 2G of video memory resources, etc.

In some embodiments, in a case that the resource unit includes a computing power resource unit, the resource unit can be determined by: determining a minimum computing power resource that support a virtual machine in implementing an image processing function based on the hardware condition of the graphics processor in the physical graphics card; using the minimum computing power resources as the computing power resource unit in the resource unit.

In this case, the graphics processor can be the GPU in the physical graphics card. Since different virtual machines require different computing power resources in processing an image-related service, the minimum granularity (minimum computing power resources) into which the computing power resources of the graphics processor can be divided can be determined based on the hardware condition of the graphics processor in the physical graphics card, to meet various requirements of virtual machine computing power resources. The minimum computing power resources can implement the image processing function required by the virtual machine and are indivisible. A computing power resource unit is the minimum computing power resources that can be allocated to a virtual machine. Directly determining the minimum computing power resources that can implement the image processing function required by the virtual machine as the computing power resource unit can guarantee the minimum requirement of virtual machine on computing power resources. On this basis, various computing power resources can be obtained by combining different numbers of computing power resource units, meeting more computing power resource requirements of virtual machines beyond the minimum computing power resource requirements.

For example, if total computing power resources of the GPU are 2000 TFLOPS (trillion floating-point operations per second), and the hardware condition of the GPU supports dividing the total computing power resources into a minimum granularity of 500 TFLOPS, then the minimum computing power resources at this time are 500 TFLOPS, and the computing power resource unit is also 500 TFLOPS.

In other embodiments, in a case that the resource unit includes a video memory resource unit, the resource unit can be determined by: determining the minimum video memory resources that support a virtual machine in implementing an image processing function based on the video memory resource usage information of at least one virtual machine; where each video memory resource usage information represents the video memory resources used by the corresponding virtual machine in processing an image-related service; determining the video memory resource unit in the resource unit based on the minimum video memory resources and a target condition; where the target condition includes: a size of the video memory resource unit being less than or equal to a size of the minimum video memory resources.

In this case, the video memory resource usage information may include multiple image-related services processed by the virtual machine, the video memory resources used by each service, and the video memory resource usage in different time periods, etc. The size of the video memory resource unit is less than or equal to the size of the minimum video memory resources, that is, the size of the video memory resource unit can be the same as the size of the minimum video memory resources required by the virtual machine, or smaller than the size of the minimum video memory resources required by the virtual machine. Since the video memory resource requirements of virtual machines are relatively variable, in order to meet the minimum video memory resource requirements of virtual machines and reduce video memory resource waste, the video memory resource unit can be set smaller than the size of the minimum video memory resources when setting the video memory resource unit.

In a feasible implementation manner, since the size of video memory resources is generally a power of 2, the size of the video memory resource unit can be set as a power of 2 to facilitate the allocation of video memory resources. At this time, the target condition is: the size of the video memory resource unit is less than or equal to the size of the minimum video memory resources, and the size of the video memory resource unit is a power of 2. In this case, the size of the video memory resource unit must not only be less than or equal to the size of the minimum video memory resources, but also must be a power of 2. For example, the video memory resource unit can be set to 512M (megabytes), where the size of the video memory resource unit is 2 to the power of 9; for another example, the video memory resource unit can be set to 1G (gigabytes), where 1G = 1024M, and the size of the video memory resource unit is 2 to the power of 10.

It can be understood that the reason for setting the target conditions as the size of the video memory resource unit being less than or equal to the size of the minimum video memory resources and the size of the video memory resource unit being a power of 2 is as follows: on the one hand, virtual machines require fewer video memory resources in processing an image-related service, and therefore, in order to reduce video memory resource waste, the size of the video memory resource unit should not be larger than the size of the minimum video memory resources; on the other hand, the size of video memory resources in an electronic device is generally a power of 2, and therefore, in order to facilitate the subsequent division of video memory resources of the physical graphics card, the size of the video memory resource unit is set as a power of 2. Thus, use of the video memory resource unit not only reduces video memory resource waste, but also guarantees the minimum video memory resource requirements of virtual machines. On this basis, various video memory resources can be obtained by combining different numbers of video memory resource units, meeting more video memory resource requirements of virtual machines beyond the minimum video memory resource requirements.

It should be noted that the target condition is not limited to the size of the video memory resource unit being not larger than the size of the minimum video memory resources and the size of the video memory resource unit being a power of 2. Instead, the target condition may be expanded according to actual service scenarios and hardware condition, such as adding: the size of the video memory resource unit cannot be set to 0.

In some embodiments, in a case that the resource unit includes a computing power resource unit and a video memory resource unit, multiple resource configuration options can be determined as follows: determining the multiple computing power resource options based on the computing power resource unit and total computing power resources of the graphics processor in the physical graphics card; determining the multiple video memory resource options based on the video memory resource unit and total video memory resources of the physical graphics card; and determining the multiple resource configuration options based on each computing power resource option and each video memory resource option.

In this case, the total computing power resources of the graphics processor in the physical graphics card may be the total computing power resources of the GPU in the physical graphics card; and the total video memory resources of the physical graphics card may be the total video memory resources of the video memory of the physical graphics card.

It can be understood that, first, multiple computing power resource options and multiple video memory resource options are determined, and then multiple resource configuration options are determined according to each computing power resource option and each video memory resource option, to obtain all combinations of computing power resources and video memory resources in the physical graphics card, and multiple resource configuration options are determined, each based on a respective combination, so as to identify all resource combinations of the physical graphics card, thus facilitating subsequently creating multiple virtual graphics processing unit devices with different resource sizes.

In a feasible implementation manner, the operation of obtaining total computing power resources and total video memory resources may be: loading the GPU host driver (driver of the physical graphics card) in the Host Operating System (host OS); and during the process of loading the physical graphics card driver, initializing the physical graphics card and obtaining the total video memory resources in the physical graphics card and the total computing power resources of the GPU (graphics processing unit) of the physical graphics card.

In a feasible implementation manner, the operation of determining multiple computing power resource options may be: determining multiple computing power resource options based on the size of the computing power resource unit and the size of the total computing power resources. For example, if the size of the computing power resource unit is 500 TFLOPS and the size of the total computing power resources is 2000 TFLOPS, the multiple computing power resource options can be: 500 TFLOPS, 1000 TFLOPS, 1500 TFLOPS, and 2000 TFLOPS.

In a feasible implementation manner, the operation of determining multiple video memory resource options may be: determining multiple video memory resource options based on the size of the video memory resource unit and the size of the total video memory resources. For example, if the size of the video memory resource unit is 512M and the size of the total video memory resources is 2G, the multiple video memory resource options can be: 512M, 1G, 1.5G, and 2G.

In a feasible implementation manner, the operation of determining multiple resource configuration options may be: determining multiple resource configuration options based on multiple video memory resource options and multiple computing power resource options. For example, if the multiple video memory resource options are 512M and 1G, and the multiple computing power resource options are 500 TFLOPS and 1000 TFLOPS, the determined multiple resource configuration options may be: resource configuration option 1 including 512M of video memory resources and 500 TFLOPS of computing power resources, resource configuration option 2 including 512M of video memory resources and 1000 TFLOPS of computing power resources, resource configuration option 3 including 1G of video memory resources and 500 TFLOPS of computing power resources, and resource configuration option 4 including 1G of video memory resources and 1000 TFLOPS of computing power resources.

In some embodiments, after determining the computing power resource unit, the computing power resource pool may be determined as follows: dividing the total computing power resources of the graphics processor in the physical graphics card based on the computing power resource unit in the resource unit, to obtain at least one first computing power resource unit, and constructing the computing power resource pool based on the at least one first computing power resource unit.

Similarly, after determining the video memory resource unit, the video memory resource pool may be determined as follows: dividing the total video memory resources of the physical graphics card based on the video memory resource unit in the resource unit, to obtain at least one first video memory resource unit, and construct the video memory resource pool based on the at least one first video memory resource unit.

In this way, dividing the total computing power resources of the graphics processor in the physical graphics card based on the computing power resource unit is to divide the total computing power resources by using the computing power resource unit as a division standard, so as to obtain the at least one first computing power resource unit, and further construct the computing power resource pool based on the at least one first computing power resource unit, where the size of each first computing power resource unit is the same as the size of the computing power resource unit. Dividing the total video memory resources of the graphics processor in the physical graphics card based on the video memory resource unit is to divide the total video memory resources by using the video memory resource unit as a division standard, so as to obtain at least one first video memory resource unit, and further construct the video memory resource pool based on at least one first video memory resource unit, where the size of each first video memory resource unit is the same as the size of the video memory resource unit.

It can be understood that constructing the computing power resource pool and the video memory resource pool is to facilitate management of computing power resources and video memory resources in the physical graphics card, and preparation for subsequently creating different virtual graphics processing unit devices for use by different virtual machines. Further, by combining multiple computing power resource units in the computing power resource pool and multiple video memory resource units in the video memory resource pool, more resources can be allocated to virtual machines with high resource requirements, and fewer resources can be allocated to virtual machines with low resource requirements, avoiding resource waste caused by allocating the same resources to virtual machines with different resource requirements in the related art.

In Step 102, a target number of the resource units is determined based on the target resource configuration option.

In this way, for each resource configuration option, a resource size of a corresponding virtual graphics processing unit device is described therein. For example, the target resource configuration option may include target computing power resources and target video memory resources, and then the target virtual graphics processing unit device created based on the target resource configuration option includes target computing power resources and target video memory resources.

In some embodiments, in a case that the target configuration option includes target computing power resources and target video memory resources, the target number of the resource units can be determined as follows: determining at least one target first computing power resource unit from at least one first computing power resource unit in the computing power resource pool based on the target computing power resources; where a sum of size(s) of the at least one target first computing power resource unit matches a size of the target computing power resources;

then, determining at least one target first video memory resource unit from at least one first video memory resource unit in the video memory resource pool based on the target video memory resources; where a sum of size(s) of the at least one target first video memory resource unit matches a size of the target video memory resources; using the at least one target first computing power resource unit and the at least one target first video memory resource unit as the target number of the resource units.

In this way, the target number of the resource units is at least one resource unit determined according to the target resource configuration option; the target number of the resource units may include at least one target first computing power resource unit and/or at least one target first video memory resource unit. The at least one target first computing power resource unit is at least one first computing power resource unit selected from the computing power resource pool according to the target computing power resources. The at least one target first video memory resource unit is at least one first video memory resource unit selected from the video memory resource pool according to the target video memory resources.

It can be understood that the sum of the size(s) of the at least one target first computing power resource unit matching the size of the target computing power resources means that the sum of the size(s) of at least one target first computing power resource unit determined from the computing power resource pool is approximately equal to the size of the target computing power resources. For example, if the size of the target computing power resources is 1000 TFLOPS, the size of each first computing power resource unit is 500 TFLOPS, and a total of 2 target first computing power resource units are needed, then the sum of the sizes of these 2 target first computing power resource units is 1000 TFLOPS. Similarly, the sum of the size(s) of the at least one target first video memory resource unit matching the size of the target video memory resources means that the sum of the size(s) of at least one target first video memory resource unit determined from the video memory resource pool is approximately equal to the size of the target video memory resources. For example, if the target video memory resources are 2G, the size of each first video memory resource unit is 512M, and a total of 4 target first video memory resource units are needed, and then the sum of the sizes of these 4 target first video memory resource units is 2G.

Specifically, in some embodiments, at least one target first computing power resource unit can be determined as follows: determining the at least one second computing power resource unit from each first computing power resource unit based on a state of each first computing power resource unit in the computing power resource pool, and determining the at least one target first computing power resource unit from the at least one second computing power resource unit based on the target computing power resources.

Correspondingly, the at least one target first video memory resource unit can be determined as follows: determining at least one second video memory resource unit from each first video memory resource unit based on a state of each first video memory resource unit in the video memory resource pool; and determining the at least one target first video memory resource unit from the at least one second video memory resource unit based on the target video memory resources.

Here, the state of the first computing power resource unit may include but is not limited to a state of being used, a state of not being used, etc.; the state of the first video memory resource unit may include but is not limited to a state of being used, a state of not being used, etc. At least one second computing power resource unit is at least one unused first computing power resource unit determined from the computing power resource pool. At least one second video memory resource unit is at least one unused first video memory resource unit determined from the video memory resource pool.

It can be understood that marking the state of the first computing power resource unit and the state of the first video memory resource unit is to facilitate knowing the currently unused first computing power resource units and unused first video memory resource units, and thereby determining at least one target first computing power resource unit needed for creating the target virtual graphics processing unit device from the unused first computing power resource units and at least one target first video memory resource unit needed for creating the target virtual graphics processing unit device from the unused first video memory resource units.

In a feasible implementation manner, first, multiple unused first computing power resource units in the computing power resource pool can be respectively determined as second computing power resource units based on the state of each first computing power resource unit in the computing power resource pool, and then the at least one target first computing power resource unit can be determined from the multiple second computing power resource units in a selection manner such as random selection, usage frequency, custom selection, or sequential selection.

In a feasible implementation manner, first, multiple unused first video memory resource units in the video memory resource pool can be respectively determined as second video memory resource units based on the state of each first video memory resource unit in the video memory resource pool, and then the at least one target first video memory resource unit can be determined from the multiple second video memory resource units in a selection manner such as random selection, usage frequency, custom selection, or sequential selection.

In Step 103, a target virtual graphics processing unit device is created based on the target number of the resource units, and a target virtual machine is run based on the target virtual graphics processing unit device.

A resource size of the target virtual graphics processing unit device is different from a resource size of at least one created virtual graphics processing unit device.

In this way, the resource size of the target virtual graphics processing unit device being different from the resource size of at least one created virtual graphics processing unit device indicates that a virtual graphics processing unit device has been created according to a resource configuration option before. In this case, a target resource configuration option can still be determined from multiple resource configuration options to create a target virtual graphics processing unit device for the target virtual machine. That is, the created virtual graphics processing unit device and its corresponding resource configuration option will not affect the current determination of a new resource configuration option (the target resource configuration option, which is different from the resource configuration option corresponding to the created virtual graphics processing unit device) from multiple resource configuration options to create a new virtual graphics processing unit device (the target virtual graphics processing unit device). In this way, creating virtual graphics processing unit devices for virtual machines through multiple resource configuration options determined based on the resource unit is not restricted by the created virtual graphics processing unit device(s), realizing the creation of virtual graphics processing unit devices (vGPU devices) with different resource sizes for different virtual machines, flexibly allocating vGPU resources, meeting various resource requirements of virtual machines, and having good flexibility. Creating the target virtual graphics processing unit device based on the target number of the resource units is actually creating the target virtual graphics processing unit device for the target virtual machine according to the resource size described in the target resource configuration option.

In a feasible implementation manner, after determining the target resource configuration option from multiple resource configuration options, a target number of the resource units can be determined based on the target resource configuration option, and the target virtual graphics processing unit device can be created based on the target number of the resource units. Specifically, the target virtual graphics processing unit device can be created based on the target number of the resource units through the mdev framework.

In some embodiments, in a case that the target virtual graphics processing unit device includes at least one target first video memory resource unit, the target virtual machine can be run based on the target virtual graphics processing unit device as follows: starting the target virtual machine; mapping the at least one target first video memory resource unit to the target virtual machine using a preset memory mapping interface, to run the target virtual machine based on the target virtual graphics processing unit device.

In this case, the preset memory mapping interface can be the Memory Mapped (mmap) interface of the Virtual Function IO (VFIO) framework.

In a feasible implementation manner, the virtual machine can be started through QEMU, and when starting the virtual machine, the mmap interface of the VFIO framework is called to map the video memory resources of the target virtual graphics processing unit device to the target virtual machine.

Specifically, in some embodiments, the at least one target first video memory resource unit may be mapped to the target virtual machine as follows: in a case that the at least one target first video memory resource unit is multiple consecutive first video memory resource units, the at least one target first video memory resource unit is mapped to the target virtual machine as a whole, to run the target virtual machine based on the target virtual graphics processing unit device; in a case that the at least one target first video memory resource unit is multiple non-consecutive first video memory resource units, the at least one target first video memory resource unit to the target virtual machine in segments to run the target virtual machine based on the target virtual graphics processing unit device.

It can be understood that if the at least one target first video memory resource unit is multiple consecutive first video memory resource units, mapping the at least one target first video memory resource unit to the target virtual machine as a whole can improve the mapping rate. Since the target first video memory resource units used in creating the target virtual graphics processing unit device may be non-consecutive, it may need to map the non-consecutive target first video memory resource units in segments to ensure the accuracy and reliability of the mapping.

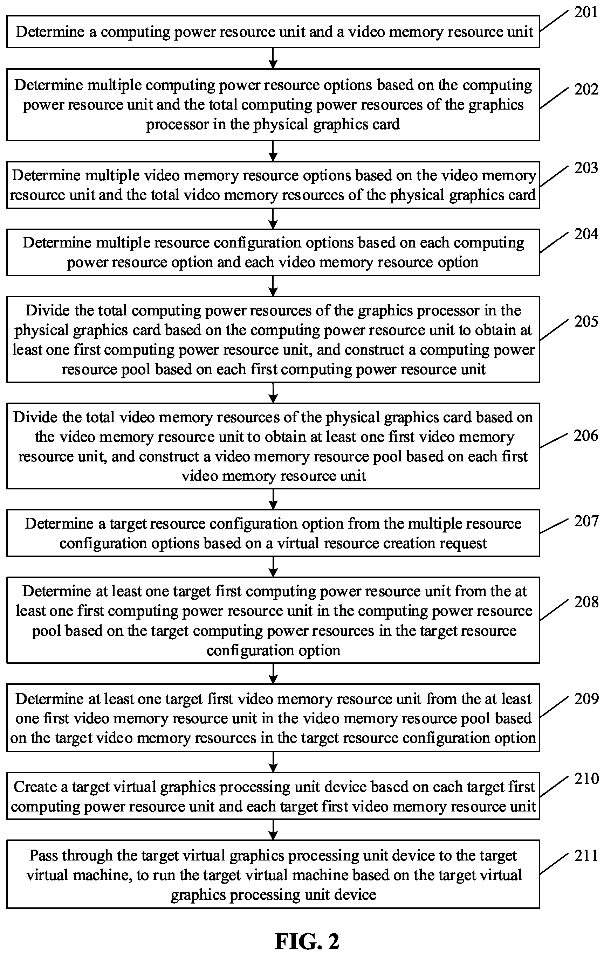

An embodiment of the present disclosure further provides a method for creating virtual resources, which is applicable to the scenario of allocating a virtual graphics processing unit (vGPU) device including computing power resources and video memory resources to a virtual machine. As shown in FIG. 2, the method includes the following steps 201 to 211.

At step 201, a computing power resource unit and a video memory resource unit are determined.

At step 202, multiple computing power resource options are determined based on the computing power resource unit and total computing power resources of the graphics processor in the physical graphics card.

At step 203, multiple video memory resource options are determined based on the video memory resource unit and total video memory resources of the physical graphics card.

At step 204, multiple resource configuration options are determined based on each computing power resource option and each video memory resource option.

At step 205, the total computing power resources of the graphics processor in the physical graphics card are divided based on the computing power resource unit to obtain at least one first computing power resource unit, and a computing power resource pool is constructed based on each first computing power resource unit.

At step 206, the total video memory resources of the physical graphics card are divided based on the video memory resource unit to obtain at least one first video memory resource unit, and a video memory resource pool is constructed based on each first video memory resource unit.

At step 207, a target resource configuration option is determined from the multiple resource configuration options based on a virtual resource creation request.

At step 208, at least one target first computing power resource unit is determined from the at least one first computing power resource unit in the computing power resource pool based on the target computing power resources specified in the target resource configuration option.

The sum of the sizes of each target first computing power resource unit is matched with the size of the target computing power resources.

At step 209, at least one target first video memory resource unit is determined from the at least one first video memory resource unit in the video memory resource pool based on the target video memory resources specified in the target resource configuration option.

The sum of the sizes of each target first video memory resource unit is matched with the size of the target video memory resources.

At step 210, a target virtual graphics processing unit device is created based on each target first computing power resource unit and each target first video memory resource unit.

At step 211, the target virtual graphics processing unit device is passed through to the target virtual machine, to run the target virtual machine based on the target virtual graphics processing unit device.

The resource size of the target virtual graphics processing unit device is different from the resource size of at least one already created virtual graphics processing unit device.

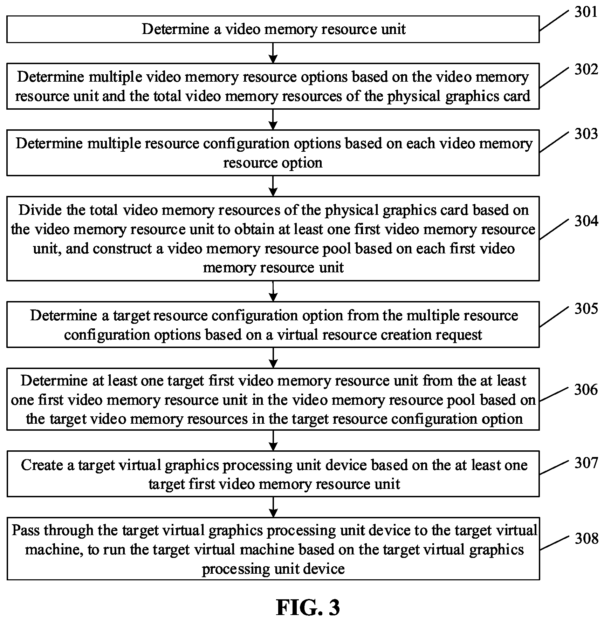

An embodiment of the present disclosure further provides a method for creating virtual resources, which is applicable to the scenario of allocating a virtual graphics processing unit device including only video memory resources to a virtual machine. As shown in FIG. 3, the method include the following steps 301 to 308:

At step 301, a video memory resource unit is determined.

At step 302, multiple video memory resource options are determined based on the video memory resource unit and the total video memory resources of the physical graphics card.

At step 303, multiple resource configuration options are determined based on each video memory resource option.

At step 304, the total video memory resources of the physical graphics card are divided based on the video memory resource unit to obtain at least one first video memory resource unit, and a video memory resource pool is constructed based on each first video memory resource unit.

At step 305, a target resource configuration option is determined from the multiple resource configuration options based on a virtual resource creation request.

At step 306, at least one target first video memory resource unit is determined from the at least one first video memory resource unit in the video memory resource pool based on the target video memory resources specified in the target resource configuration option.

The sum of the sizes of each target first video memory resource unit is matched with the size of the target video memory resources.

At step 307, a target virtual graphics processing unit device is created based on the at least one target first video memory resource unit.

At step 308, the target virtual graphics processing unit device is passed through to the target virtual machine, to run the target virtual machine based on the target virtual graphics processing unit device.

The resource size of the target virtual graphics processing unit device is different from the resource size of at least one already created virtual graphics processing unit device.

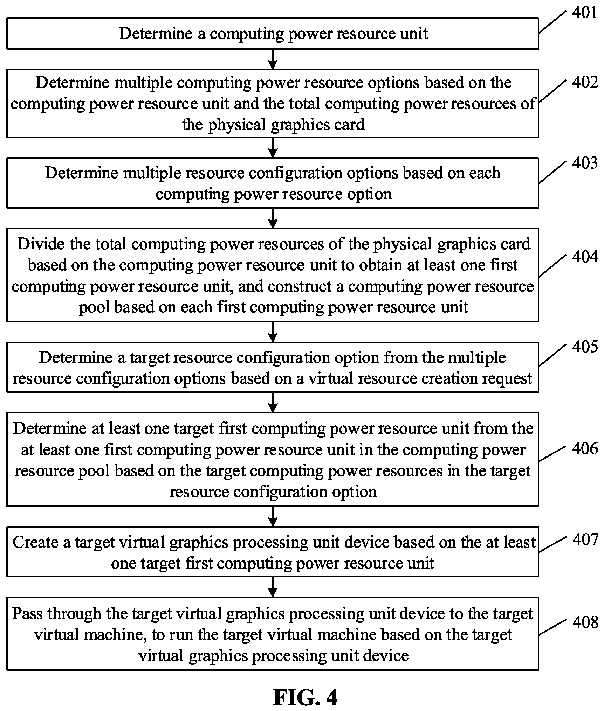

An embodiment of the present disclosure further provides a method for creating virtual resources, which is applicable to the scenario of allocating a virtual graphics processing unit device including only computing power resources to a virtual machine. As shown in FIG. 4, the method include the following steps 401 to 408:

At step 401, a computing power resource unit is determined.

At step 402, multiple computing power resource options are determined based on the computing power resource unit and the total computing power resources of the physical graphics card.

At step 403, multiple resource configuration options are determined based on each computing power resource option.

At step 404, the total computing power resources of the physical graphics card are divided based on the computing power resource unit to obtain at least one first computing power resource unit, and a computing power resource pool is constructed based on each first computing power resource unit.

At step 405, a target resource configuration option is determined from the multiple resource configuration options based on a virtual resource creation request.

At step 406, at least one target first computing power resource unit is determined from the at least one first computing power resource unit in the computing power resource pool based on the target computing power resources specified in the target resource configuration option.

The sum of the sizes of each target first computing power resource unit is matched with the size of the target computing power resources.

At step 407, a target virtual graphics processing unit device is created based on the at least one target first computing power resource unit.

At step 408, the target virtual graphics processing unit device is passed through to the target virtual machine, to run the target virtual machine based on the target virtual graphics processing unit device.

The resource size of the target virtual graphics processing unit device is different from the resource size of at least one already created virtual graphics processing unit device.

An exemplary application of the embodiments of the present disclosure in a practical scenario is described below. In practical application scenarios, the virtual graphics processing unit device is referred to as a vGPU device.
1. The GPU host driver (driver of the physical graphics card) is loaded on the Linux system.
   a) During the initialization of the GPU device by loading the GPU host driver, the GPU computing power resources (total computing power resources) and total video memory resources of the physical graphics card are obtained, and a computing power resource pool and a video memory resource pool for the physical graphics card are respectively created to manage the resources in the physical graphics card and prepare for the subsequent creation of vGPU devices.
      i. Creation of a video memory resource pool: The setting conditions for the video memory resource unit are as follows: the size of the video memory resource unit is less than or equal to the minimum video memory resources required by the virtual machine; the size of the video memory resource unit is a power of 2; the size can also be set according to service scenarios and hardware conditions. For example, the total video memory resources are divided by using a 256M video memory resource unit, and the divided first video memory resource units are placed into the video memory resource pool to form the video memory resource pool. Each first video memory resource unit in the video memory resource pool is marked as used or unused according to the resource usage status.
      ii. Creation of a computing power resource pool: The computing power resource unit is determined according to the minimum computing power resources required to fulfill the GPU functions in the virtual machine; the total computing power resources owned by the physical graphics card are divided by using the computing power resource unit, and the divided first computing power resource units are placed into the computing power resource pool to form the computing power resource pool. Each first computing power resource unit in the computing power resource pool is marked as used or unused according to the resource usage status.
2. A vGPU device is created according to the mdevctl type on the Linux system, and the vGPU device is allocated to the virtual machine for use.
   a) A vGPU device of a specified mdevctl type (e.g., 1G of video memory resources and 500 TFLOPS of computing power resources) is created.
      i. According to the video memory resources (target video memory resources) specified in the selected mdevctl type, the video memory resources required by the vGPU device (at least one target first video memory resource) are extracted from the video memory resource pool managed by the GPU host driver by the GPU host driver and allocated to the vGPU device. For example, 1G of video memory resources are allocated to the vGPU device from the video memory resource pool, and the relevant information of the allocated video memory resources is saved.
      ii. According to the computing power resources (target computing power resources) specified in the selected mdevctl type, the computing power resources required by the vGPU device (at least one target first computing power resource) are extracted from the computing power resource pool by the GPU host driver and allocated to the vGPU device.
   b) After the vGPU device is created, the target virtual machine is started, and the vGPU device is passed through to the target virtual machine.
      i. When the virtual machine is started by QEMU, the mmap interface of the VFIO framework is called by QEMU to map the video memory resources of the vGPU device (e.g., memory bar 2), and this interface is ultimately called to the GPU host driver. Whether the video memory resources previously allocated to the vGPU device are multiple consecutive first video memory resource units is determined by the GPU host driver; if the video memory resources allocated to the vGPU device are not multiple consecutive first video memory resource units, they are divided into several consecutive memory segments, and the video memory resources of the vGPU device are mapped to the target virtual machine in segments. If the video memory resources allocated to the vGPU device are consecutive, the video memory resources of the vGPU device are mapped to the target virtual machine as a whole.
      ii. The computing power resources in the vGPU device can be directly used by the virtual machine.
      iii. The virtual machine is started successfully, the GPU guest driver is loaded in the virtual machine, and the vGPU is used for encoding, decoding and rendering tasks in the virtual machine.
   c) A new vGPU device of a different mdevctl type (e.g., 2G of video memory resources and 500 TFLOPS of computing power resources) is created.
      i. The video memory resources corresponding to the different mdevctl type are extracted from the video memory resource pool and allocated to the new vGPU device, and the relevant information of the allocated video memory resources is saved.
      ii. The computing power resources corresponding to the different mdevctl type are extracted from the computing power resource pool and allocated to the new vGPU device.
   d) After the new vGPU device is created, the new virtual machine is started, and the new vGPU device is passed through to the new virtual machine.

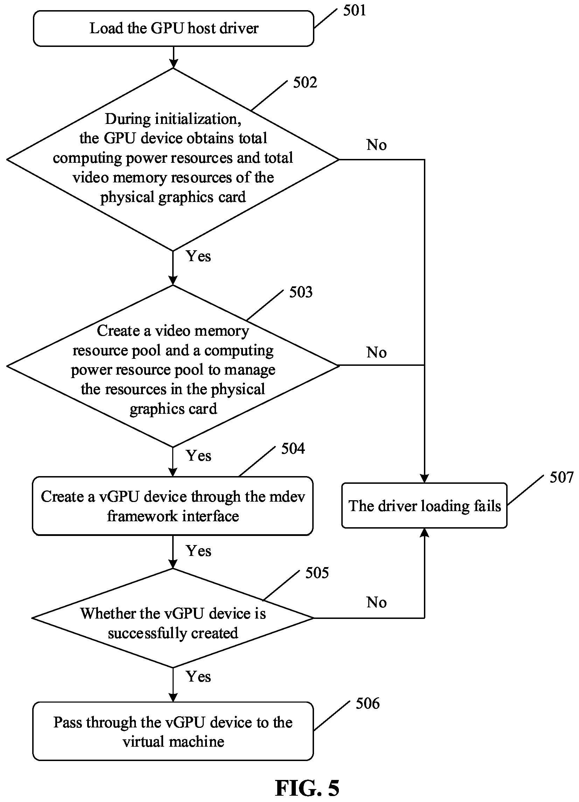

FIG. 5 is a schematic flowchart chart of creating a vGPU device according to an embodiment of the present disclosure. Specifically, as shown in FIG. 5, the operation of creating a vGPU device includes the following steps 501 to 507.

At step 501, a GPU host driver (driver of the physical graphics card) is loaded.

At step 502, during initialization of the GPU device, the total computing power resources (GPU computing power resources) and total video memory resources of the physical graphics card are obtained.

If the total computing power resources and total video memory resources are successfully obtained, the process proceeds to step 503; if the initialization of the GPU device fails and/or the total computing power resources and total video memory resources are not successfully obtained, the process proceeds to step 507.

At step 503, a video memory resource pool and a computing power resource pool are created to manage the resources in the physical graphics card.

If the video memory resource pool and the computing power resource pool are successfully created, the process proceeds to step 504; if the creation of the video memory resource pool and the computing power resource pool fails, the process proceeds to step 507.

At step 504, a vGPU device is created through the mdev framework interface.

At step 505, whether the vGPU device is successfully created is determined; if the creation of the vGPU device fails, the process proceeds to step 507; if the vGPU device is successfully created, the process proceeds to step 506.

At step 506, the vGPU device is passed through to the virtual machine.

At step 507, the driver loading fails.

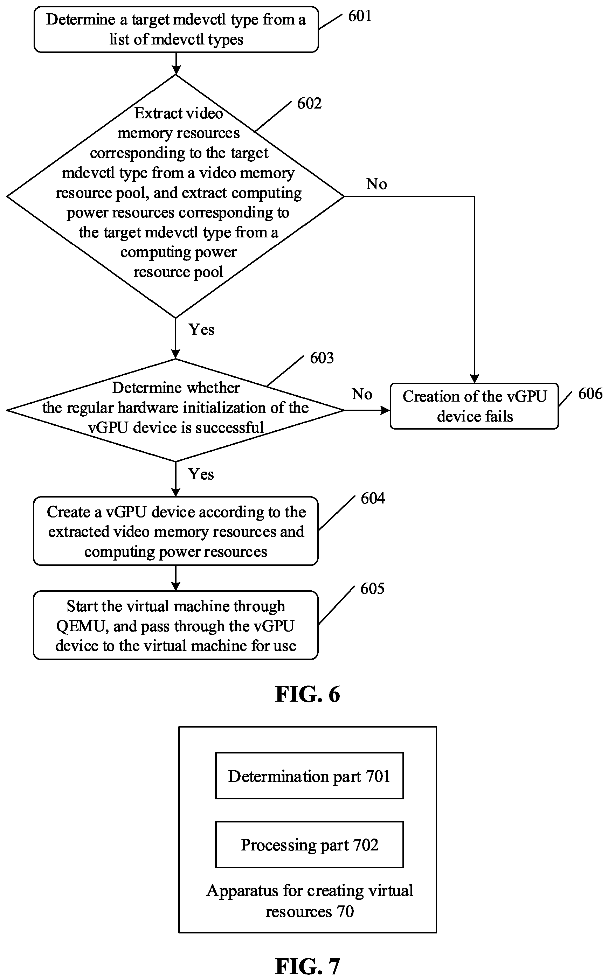

FIG. 6 is another schematic flowchart chart of creating a vGPU device according to an embodiment of the present disclosure. Specifically, as shown in FIG. 6, the operation of creating a vGPU device includes the following steps 601 to 606.

At step 601, a target mdevctl type is determined from a list of mdevctl types.

At step 602, video memory resources corresponding to the target mdevctl type are extracted from a video memory resource pool, and computing power resources corresponding to the target mdevctl type are extracted from a computing power resource pool.

If the video memory resources and computing power resources corresponding to the target mdevctl type are successfully extracted, the process proceeds to step 603; if the video memory resources and computing power resources corresponding to the target mdevctl type are not successfully extracted, the process proceeds to step 606.

At step 603, it is determined whether the regular hardware initialization of the vGPU device is successful.

Hardware initialization includes but is not limited to interrupt initialization, register configuration, etc.; if the hardware initialization is successful, the process proceeds to step 604; if the hardware initialization fails, the process proceeds to step 606.

At step 604, a vGPU device is created according to the extracted video memory resources and computing power resources.

At step 605, the virtual machine is started through qemu, and the vGPU device is passed through to the virtual machine for use.

At step 606, the creation of the vGPU device fails.

The method for creating virtual resources according to the embodiment of the present disclosure pre-divides the total computing power resources of the physical graphics card into multiple computing power resource units and the total video memory resources of the physical graphics card into multiple video memory resource units, constructs a computing power resource pool based on the multiple computing power resource units, and constructs a video memory resource pool based on the multiple video memory resource units; constructs multiple resource configuration options according to the multiple computing power resource units and multiple video memory resource units. In this way, different vGPU devices can be created for virtual machines at any time through the multiple resource configuration options, without pausing the service running on the virtual machine, shutting down the virtual machine, or destroying the vGPU device that has already been created, and vGPU devices of different mdevctl types can be recreated. vGPU devices with different resource sizes can be created for different virtual machines and passed through to different virtual machines for use. For example, a virtual machine with heavy service load can be assigned a vGPU device including more GPU resources, and a virtual machine with light service load can be assigned a vGPU device including fewer resources. Thus, different vGPU devices are created for different virtual machines according to the virtual machines' respective service requirements, which can avoid resource waste caused by over-allocation or under-allocation of resources, and prevent negative impacts on user experience due to insufficient resource allocation.

It should be noted that although the steps of the method in the present disclosure are described in a specific order in the accompanying drawings, this does not require or imply that these steps must be performed in this specific order, or that all shown steps must be performed to achieve the desired results. Additionally or alternatively, some steps may be omitted, multiple steps may be combined into one step for execution, and/or one step may be decomposed into multiple steps for execution; or steps from different embodiments may be combined to form a new technical solution.

Based on the foregoing embodiments, the embodiments of the present disclosure provide an apparatus for creating virtual resources. FIG. 7 is a schematic structural diagram of an apparatus for creating virtual resources according to an embodiment of the present disclosure. As shown in FIG. 7, the apparatus 70 for creating virtual resources includes a determination part 701 and a processing part 702.

The determination part 701 is configured to determine a target resource configuration option from a plurality of resource configuration options based on a virtual resource creation request. The resource configuration options are determined based on one or more resource units that are located on a physical graphics card and support a virtual machine in implementing an image processing function.

The determination part 701 is configured to determine a target number of the resource units based on the target resource configuration option.

The processing part 702 is configured to create a target virtual graphics processing unit device based on the target number of the resource units, and run a target virtual machine based on the target virtual graphics processing unit device.

In some embodiments, the determination part 701 is further configured to: determine a resource unit based on minimum resources that support the virtual machine in implementing the image processing function; and determine the resource configuration options based on the resource unit.

In some implementations, the resource unit includes a computing power resource unit. The determination part 701 is further configured to: determine minimum computing power resources that support the virtual machine in implementing the image processing function based on a hardware condition of the graphics processor in the physical graphics card; and use the minimum computing power resources as a computing power resource unit in the resource unit.

In some implementations, the resource unit includes a video memory resource unit. The determination part 701 is further configured to: determine minimum video memory resources that support the virtual machine in implementing the image processing function based on video memory resource usage information of at least one virtual machine; wherein each piece of the video memory resource usage information represents the video memory resources used by the corresponding virtual machine in processing an image-related service; determine a video memory resource unit in the resource unit based on the minimum video memory resources and the target condition; wherein the target condition includes: a size of the video memory resource unit being less than or equal to a size of the minimum video memory resources.

In some implementations, the resource unit includes a computing power resource unit and a video memory resource unit. The processing part 702 is further configured to: determine a plurality of computing power resource options based on the computing power resource units and total computing power resources of the graphics processor in the physical graphics card; determine a plurality of video memory resource options based on the video memory resource units and the total video memory resources of the physical graphics card; determine the resource configuration options based on each of the computing power resource options and each of the video memory resource options.

In some implementations, the target resource configuration option includes target computing power resources and target video memory resources. The processing part 702 is further configured to: determine at least one target first computing power resource unit from at least one first computing power resource unit in a computing power resource pool based on the target computing power resources; wherein the sum of the sizes of each target first computing power resource unit matches the size of the target computing power resources; determine at least one target first video memory resource unit from at least one first video memory resource unit in a video memory resource pool based on the target video memory resources; wherein the sum of the sizes of each target first video memory resource unit matches the size of the target video memory resources; use the at least one target first computing power resource unit and the at least one target first video memory resource unit as the target number of the resource units.

In some implementations, the processing part 702 is further configured to: determine at least one second computing power resource unit from each of the first computing power resource units in the computing power resource pool based on a state of each first computing power resource unit, and determine the at least one target first computing power resource unit from the at least one second computing power resource unit based on the target computing power resources;

Correspondingly, the processing part 702 is further configured to: determine at least one second video memory resource unit from each of the first video memory resource units in the video memory resource pool based on a state of each first video memory resource unit; determine the at least one target first video memory resource unit from the at least one second video memory resource unit based on the target video memory resources.

In some implementations, the resource unit includes a computing power resource unit and a video memory resource unit. The processing part 702 is further configured to: divide total computing power resources of the graphics processor in the physical graphics card based on the computing power resource unit in the resource unit to obtain at least one first computing power resource unit, and construct the computing power resource pool based on each first computing power resource unit; divide the total video memory resources of the physical graphics card based on the video memory resource unit in the resource unit to obtain at least one first video memory resource unit, and construct the video memory resource pool based on each first video memory resource unit.

In some implementations, the target virtual graphics processing unit device includes at least one target first video memory resource unit; the processing part 702 is further configured to: in a case that the at least one target first video memory resource unit is a plurality of consecutive first video memory resource units, map the at least one target first video memory resource unit as a whole to the target virtual machine, to run the target virtual machine based on the target virtual graphics processing unit device; in a case that the at least one target first video memory resource unit is a plurality of non-consecutive first video memory resource units, map the at least one target first video memory resource unit to the target virtual machine in segments, to run the target virtual machine based on the target virtual graphics processing unit device.

In some implementations, the resource size of the target virtual graphics processing unit device is different from the resource size of at least one already created virtual graphics processing unit device.

The description of the apparatus embodiments is similar to that of the foregoing method embodiments and has similar beneficial effects as the method embodiments. For technical details not disclosed in the apparatus embodiments of the present disclosure, reference may be made to the description of the method embodiments of the present disclosure for understanding.

It should be noted that the division of modules in the apparatus for creating virtual resources shown in FIG. 7 in the embodiments of the present disclosure is illustrative and merely a logical function division; in actual implementation, there may be other division manners. In addition, each functional unit in the various embodiments of the present disclosure may be integrated into one processing unit, or each unit may exist alone physically, or two or more units may be integrated into one unit. The above integrated units may be implemented in the form of hardware, or in the form of software functional units, or in a combination of software and hardware.

It should be noted that, in the embodiments of the present disclosure, if the above method is implemented in the form of software functional modules and sold or used as an independent product, it may also be stored in a computer-readable storage medium. Based on such an understanding, the technical solution of the embodiments of the present disclosure essentially, or the part contributing to the related art, may be embodied in the form of a software product. The computer software product is stored in a storage medium and includes several instructions to enable an electronic device to execute all or part of the steps of the methods described in the various embodiments of the present disclosure. The aforementioned storage medium includes various media that can store program codes, such as a USB flash drive, a removable hard disk, a Read Only Memory (ROM), a magnetic disk, or an optical disc. Thus, the embodiments of the present disclosure are not limited to any specific combination of hardware and software.

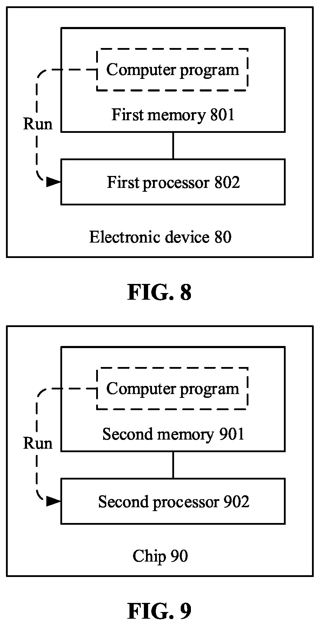

The embodiments of the present disclosure provide an electronic device. FIG. 8 is a schematic diagram of the hardware entity of an electronic device according to an embodiment of the present disclosure. As shown in FIG. 8, the electronic device 80 includes a first memory 801 and a first processor 802. The first memory 801 stores a computer program that can run on the first processor 802. The first processor 802 is configured to implement the method described in the embodiments of the present disclosure when executing the program.

It should be noted that the first memory 801 is configured to store instructions and applications executable by the first processor 802, and may also cache data (e.g., image data, audio data, voice communication data, and video communication data) to be processed or processed by each module in the first processor 802 and the electronic device 80, and may be implemented by flash memory or Random Access Memory (RAM).

In the embodiments of the present disclosure, in the process of implementing the n method for creating a vGPU device described in the embodiments of the present disclosure, the electronic device 80 may be various types of devices with information processing capabilities. For example, the electronic device 80 may include a mobile phone, a tablet computer, a desktop computer, a notebook computer, a host computer, etc.

The embodiments of the present disclosure provide a chip. FIG. 9 is a schematic structural diagram of a chip according to an embodiment of the present disclosure. As shown in FIG. 9, the chip 90 includes a second memory 901 and a second processor 902. The second memory 901 stores a computer program that can run on the second processor 902. When the second processor 902 is configured to implement the method described in the embodiments of the present disclosure when executing the program.

The embodiments of the present disclosure provide a computer-readable storage medium having a computer program stored thereon. When the computer program is executed by a processor, the steps in the methods provided in the foregoing embodiments are implemented.

The embodiments of the present disclosure provide a computer program product including instructions that, when running on a computer, cause the computer to execute the steps in the methods provided in the foregoing method embodiments.

It should be pointed out herein that the descriptions of the foregoing storage medium, chip and device embodiments are similar to those of the aforementioned method embodiments and have similar beneficial effects as the method embodiments. For the technical details not disclosed in the storage medium, chip and device embodiments of the present disclosure, reference may be made to the descriptions of the method embodiments of the present disclosure for understanding.

It should be noted herein that references throughout the specification to "one embodiment", "an embodiment", or "some embodiments" mean that a specific feature, structure, or characteristic related to the embodiments is included in at least one embodiment of the present disclosure. Thus, the appearances of the phrases "in one embodiment", "in an embodiment", or "in some embodiments" in various places throughout the specification are not necessarily all referring to the same embodiment. Furthermore, these specific features, structures, or characteristics may be combined in any suitable manner in one or more embodiments. It should be understood that, in the various embodiments of the present disclosure, the sequence numbers of the above processes do not mean the order of execution; the order of execution of each process should be determined by its function and internal logic, and should not constitute any limitation on an implementation flowchart of the embodiments of the present disclosure. The sequence numbers of the embodiments of the present disclosure are merely for description and do not represent the superiority or inferiority of the embodiments. The descriptions of the various embodiments above tend to emphasize the differences between the various embodiments, and the same or similar parts may be referred to each other, which are not repeated herein for the sake of brevity.

The term "and/or" herein is merely an association relationship describing associated objects, indicating that three relationships may exist. For example, object A and/or object B may indicate the three cases of object A existing alone, object A and object B existing simultaneously, and object B existing alone.

It should be noted that, in this document, the terms "comprise", "include", or any other variation thereof are intended to cover a non-exclusive inclusion, such that a process, method, article, or apparatus including a list of elements not only includes those elements but also includes other elements not explicitly listed, or further includes elements inherent to such a process, method, article, or apparatus. Without further limitations, an element defined by the phrase "comprising a..." does not exclude the presence of additional identical elements in the process, method, article, or apparatus that includes the element.

In the several embodiments provided in the present disclosure, it should be understood that the disclosed apparatus and method may be implemented in other manners. The above-described embodiments are merely illustrative. For example, the division of the modules is merely a logical function division; in actual implementation, there may be other division manners, such as combining multiple modules or components into another system, or omitting or not executing some features. In addition, the coupling, direct coupling, or communication connection between the components shown or discussed may be through some interfaces, and the indirect coupling or communication connection of the devices or modules may be electrical, mechanical, or in other forms.

The modules described as separate components may or may not be physically separated; the components shown as modules may or may not be physical modules; they may be located in one place, or may be distributed over multiple network units. Some or all of the modules may be selected according to actual needs to achieve the purpose of the solution of this embodiment.

In addition, each functional module in each embodiment of the present disclosure may be integrated into one processing unit, or each module may exist alone as a separate unit, or two or more modules may be integrated into one unit. The above integrated modules may be implemented in the form of hardware, or in the form of hardware plus software functional units.

A person of ordinary skill in the art may understand that all or part of the steps of the method embodiments may be implemented by a program instructing relevant hardware. The foregoing program may be stored in a computer-readable storage medium. When the program runs, the steps of the method embodiments are executed. The foregoing storage medium includes removable storage devices, Read Only Memory (ROM), magnetic disks, optical discs, and other media that can store program codes.

Alternatively, if the above integrated units in the present disclosure are implemented in the form of software functional modules and sold or used as independent products, they may also be stored in a computer-readable storage medium. Based on such an understanding, the technical solution of the embodiments of the present disclosure essentially, or the part contributing to the related art, may be embodied in the form of a software product. The computer software product is stored in a storage medium and includes several instructions to enable an electronic device to execute all or part of the steps of the methods described in the various embodiments of the present disclosure. The aforementioned storage medium includes various media that can store program codes, such as removable storage devices, ROM, magnetic disks, or optical discs.

The methods disclosed in the several method embodiments provided in the present disclosure may be combined arbitrarily without conflict to obtain new method embodiments.

The features disclosed in the several product embodiments provided in the present disclosure may be combined arbitrarily without conflict to obtain new product embodiments.

The features disclosed in the several method or apparatus embodiments provided in the present disclosure may be combined arbitrarily without conflict to obtain new method embodiments or apparatus embodiments.

The foregoing is merely the implementation manners of the present disclosure, but the protection scope of the present disclosure is not limited thereto. Any person skilled in the art can easily conceive of changes or substitutions within the technical scope disclosed in the present disclosure, which shall be covered by the protection scope of the present disclosure.

### Industrial Applicability

The embodiments of the present disclosure provide a method and apparatus for creating virtual resources, an electronic device, a chip, a storage medium, and a computer program product. The method for creating virtual resources includes: determining a target resource configuration option from a plurality of resource configuration options based on a virtual resource creation request; the resource configuration options are determined based on one or more resource units that are located on a physical graphics card and support a virtual machine in implementing an image processing function; determining a target number of the resource units based on the target resource configuration option; creating a target virtual graphics processing unit device based on the target number of the resource units, and running a target virtual machine based on the target virtual graphics processing unit device. The above solution is not restricted by the virtual graphics processing unit device that has already been created, enabling the creation of virtual graphics processing unit devices (vGPU devices) with different resource sizes for different virtual machines, flexible allocation of vGPU resources, satisfying the diverse resource requirements of virtual machines, and achieving good flexibility.

## Claims

1. A method for creating virtual resources, comprising:
determining a target resource configuration option from a plurality of resource configuration options based on a virtual resource creation request, wherein the resource configuration options are determined based on one or more resource units that are located on a physical graphics card and support a virtual machine in implementing an image processing function;
determining a target number of the resource units based on the target resource configuration option; and
creating a target virtual graphics processing unit (vGPU) device based on the target number of the resource units, and running a target virtual machine based on the target vGPU device.

2. The method of claim 1, further comprising:
determining the resource unit based on minimum resources that support the virtual machine in implementing the an image processing function; and
determining the resource configuration options based on the resource unit.

3. The method of claim 2, wherein the resource unit comprises a computing power resource unit; and
wherein determining the resource unit based on the minimum resources that support the virtual machine in implementing the image processing function comprises:
determining minimum computing power resources that support the virtual machine in implementing the image processing function based on a hardware condition of a graphics processor in the physical graphics card; and
using the minimum computing power resources as the computing power resource unit in the resource unit.

4. The method of claim 2, wherein the resource unit comprises a video memory resource unit; and
wherein determining the resource unit based on the minimum resources that support the virtual machine in implementing the image processing function comprises:
determining minimum video memory resources that support the virtual machine in implementing the image processing function based on video memory resource usage information of at least one virtual machine, wherein each piece of the video memory resource usage information indicates video memory resources used by a corresponding virtual machine in processing an image-related service; and
determining the video memory resource unit in the resource unit based on the minimum video memory resources and a target condition, wherein the target condition comprises: a size of the video memory resource unit being less than or equal to a size of the minimum video memory resources.

5. The method of any one of claims 2-4, wherein the resource unit comprises a computing power resource unit and a video memory resource unit; and
wherein determining the resource configuration options based on the resource unit comprises:
determining a plurality of computing power resource options based on the computing power resource unit and total computing power resources of the graphics processor in the physical graphics card;
determining a plurality of video memory resource options based on the video memory resource unit and total video memory resources of the physical graphics card; and
determining the resource configuration options based on each of the computing power resource options and each of the video memory resource options.

6. The method of any one of claims 1-5, wherein the target resource configuration option includes target computing power resources and target video memory resources; and wherein determining the target number of the resource units based on the target resource configuration option comprises:
determining at least one target first computing power resource unit from at least one first computing power resource unit in a computing power resource pool based on the target computing power resources, wherein a sum of size(s) of the at least one target first computing power resource unit matches a size of the target computing power resources;
determining at least one target first video memory resource unit from at least one first video memory resource unit in a video memory resource pool based on the target video memory resources, wherein a sum of size(s) of the at least one target first video memory resource unit matches a size of the target video memory resources; and
using the at least one target first computing power resource unit and the at least one target first video memory resource unit as the target number of the resource units.

7. The method of claim 6,
wherein determining the at least one target first computing power resource unit from the at least one first computing power resource unit in the computing power resource pool based on the target computing power resources comprises: determining at least one second computing power resource unit from each of the at least one first computing power resource unit in the computing power resource pool based on a state of each of the at least one first computing power resource unit, and determining the at least one target first computing power resource unit from the at least one second computing power resource unit based on the target computing power resources; and
wherein determining the at least one target first video memory resource unit from the at least one first video memory resource unit in the video memory resource pool based on the target video memory resources comprises: determining at least one second video memory resource unit from each of the at least one first video memory resource unit in the video memory resource pool based on a state of each of the at least one first video memory resource unit; and determining the at least one target first video memory resource unit from the at least one second video memory resource unit based on the target video memory resources.

8. The method of claim 6, wherein the resource unit comprises a computing power resource unit and a video memory resource unit; and the method further comprises:
dividing the total computing power resources of the graphics processor in the physical graphics card based on the computing power resource unit in the resource unit, to obtain the at least one first computing power resource unit, and constructing the computing power resource pool based on each of the at least one first computing power resource unit; and
dividing the total video memory resources of the physical graphics card based on the video memory resource unit in the resource unit, to obtain the at least one first video memory resource unit, and constructing the video memory resource pool based on each of the at least one first video memory resource unit.

9. The method of any one of claims 1-8, wherein the target vGPU device comprises at least one target first video memory resource unit; and
wherein running the target virtual machine based on the target vGPU device comprises:
in a case that the at least one target first video memory resource unit is a plurality of consecutive first video memory resource units, mapping the at least one target first video memory resource unit as a whole to the target virtual machine, to run the target virtual machine based on the target vGPU device; and
in a case that the at least one target first video memory resource unit is a plurality of non-consecutive first video memory resource units, mapping the at least one target first video memory resource unit to the target virtual machine in segments, to run the target virtual machine based on the target vGPU device.

10. The method of any one of claims 1-9, wherein a resource size of the target vGPU device is different from a resource size of at least one created vGPU device.

11. An apparatus for creating virtual resources, comprising:
a determination part configured to: determine a target resource configuration option from a plurality of resource configuration options based on a virtual resource creation request, wherein the resource configuration options are determined based on one or more resource units that are located on a physical graphics card and support a virtual machine in implementing an image processing function; and determine a target number of the resource units based on the target resource configuration option; and
a processing part configured to create a target virtual graphics processing unit (vGPU) device based on the target number of the resource units, and run a target virtual machine based on the target vGPU device.

12. An electronic device, comprising a first memory and a first processor, wherein the first memory stores a computer program executable by the first processor, and the first processor is configured to implement the method of any one of claims 1-10 when executing the computer program.

13. A chip, comprising a second memory and a second processor, wherein the second memory stores a computer program executable by the second processor, and the second processor is configured to implement the method of any one of claims 1-10 when executing the computer program.

14. A non-transitory computer-readable storage medium having a computer program stored thereon, wherein the computer program, when executed by a processor, implements the method of any one of claims 1-10.

15. A computer program product, comprising a non-transitory computer-readable storage medium storing a computer program, wherein the computer program, when read and executed by a computer, implements the method of any one of claims 1-10.
